# DEMANDE DE BREVET EUROPEEN

(11) **EP 0 881 409 A1**
(43) Date de publication de la demande: **02.12.1998**
(21) Numéro de dépôt: 98480033.4
(22) Date de dépôt: 15.05.1998
(51) Int. Cl.: F16H 19/00, F16H 55/10, E05F 11/14

(54) **Dispositif d'ouverture à crémaillère à désalignement possible**

(30) Priorité: 30.05.1997 FR 9706767
(71) Demandeur: Curau, Antoine, 06340 Drap (FR)
(72) Inventeur: Curau, Antoine, 06340 Drap (FR)
(74) Mandataire: Hautier, Jean-Louis

(57) **Abrégé**

La présente invention concerne un dispositif d'ouverture d'un châssis mobile par rapport à un bâti fixe, qui est constitué d'au moins une crémaillère (3) et d'au moins une roue dentée et motrice.

D'une part la crémaillère (3) comporte une succession de trous ronds. D'autre part, la roue (4) comporte des entraîneurs (7) de section transversale ronde. Chaque entraîneur (7) peut engrener chaque trou (5).

L'invention trouve une application préférentielle dans l'équipement mécanique de serres.

## Description

La présente invention concerne un dispositif d'ouverture d'un châssis mobile par rapport à un bâti fixe, qui est constitué d'au moins une crémaillère et d'au moins une roue dentée et motrice.

*Dans l'état de la technique le plus courant, la crémaillère comporte un certain nombre d'alésages alignés de découpe polygonale, dans lesquels les dents, de section également polygonale et identique aux alésages, viennent engrener la crémaillère.*

Le problème essentiel de ce type de construction réside dans le fait que le désalignement de la crémaillère n'est pas possible. Si un tel désalignement apparaissait, il y aurait obligatoirement une détérioration des bords des alésages par les dents et/ou des bords desdites dents par lesdits alésages.

*Bien entendu, il est toujours possible de fabriquer des alésages de grandes dimensions et des dents de petites dimensions pour permettre un certain désalignement.*

Pourtant cette solution n'est toujours pas satisfaisante, puisqu'il y a création d'un jeu important entre la crémaillère et la roue dentée.

Il découle de cet état de fait une propension à une usure excessive, ce qui nécessite un entretien important et onéreux.

*Pour résoudre ce problème, le document FR-A-2.500.882 a pour objet un dispositif pour le déplacement simultané de châssis vitrés sur des toits de longueur importante. Il comporte des roues dentées montées* à *intervalles réguliers sur un arbre moteur entraînant des crémaillères respectives de déplacement de châssis* *vitré. Les dents de chaque roue sont plus larges et plus minces* que *les dents de la crémaillère. Pour assurer l'engrènement, la crémaillère présente des nervures de support qui portent contre les surfaces cylindriques de rebords de la roue dentée et les surfaces de rouleaux de soutien, ce qui permet à chaque crémaillère articulée sur un châssis vitré de se déplacer en translation ou en rotation autour de son point de contact avec la roue dentée sans suppression de l'engrènement, de sorte qu'on évite des coincements résultant de dilatations et contractions thermiques de l'arbre.*

Dans ce cas, il est évident que le désalignement de la crémaillère est facilité. Pourtant la solution apportée n'est toujours pas optimale.

Le premier inconvénient réside dans le fait qu'il y a toujours du jeu, ce qui est synonyme d'usure rapide. Le second inconvénient a trait à l'absence de guidage de la crémaillère par rapport à la roue dentée d'entraînement, ce qui nuit encore la fiabilité du dispositif d'ouverture.

La présente invention propose une solution à tous les problèmes de l'état de la technique. Elle a pour objet une crémaillère dont les alésages ou empreintes sont circulaires ou ronds avec des entraîneurs ou tétons de section transversale identique, mais de dimensions justes inférieures. Il y a donc peu de jeu et d'usure et la fiabilité d'ensemble est accrue. De plus, le guidage de la crémaillère est assuré d'une part par la forme des entraîneurs et d'autre part par un carter qui circonscrit la roue dentée.

A cet effet, l'invention concerne un dispositif d'ouverture d'un châssis mobile par rapport à un bâti fixe, qui est constitué d'au moins une crémaillère et d'au moins une roue dentée et motrice, caractérisé par le fait que la crémaillère comporte une succession d'alésages ronds, et que la roue comporte des entraîneurs de section transversale ronde, chaque entraîneur pouvant engrener chaque alésage.

Le diamètre de chaque alésage est supérieur au diamètre de chaque entraîneur.

Le rapport entre le diamètre de chaque alésage sur le diamètre de chaque entraîneur est compris entre 1,1 et 1,3.

Plus précisémment, la diamètre de l'alésage est de 8 mm et celui de l'extrémité est de 7 mm.

Selon un premier mode de réalisation, l'extrémité distale de chaque entraîneur est arrondie.

Selon un second mode de réalisation, l'extrémité distale de chaque entraîneur est tronconique.

Selon une variante de ce second mode de réalisation, la pente du cylindre arrondi de l'extrémité distale de chaque entraîneur est compris entre 40 et 50° par rapport à l'axe longitudinal de l'entraîneur.

Quel que soit le mode de réalisation, entre l'extrémité distale et l'extrémité proximale, qui sert d'interface entre l'entraîneur et le reste de la roue, le corps de dudit entraîneur est constitué par un cylindre droit.

Quel que soit le mode de réalisation et selon une structure différente entre l'extrémité distale et l'extrémité proximale, qui sert d'interface entre l'entraîneur et le reste de la roue, le corps de dudit entraîneur est constitué par un cylindre arrondi.

Dans ce dernier cas, la pente du cylindre arrondi du corps de chaque entraîneur est compris entre 5 et 15° par rapport à l'axe longitudinal de l'entraîneur.

Dans tous les cas de figure, les entraîneurs, qui ne coopèrent pas avec la crémaillère, sont confinées dans un carter.

Dans ce cas, le carter comporte au moins un passant pour le guidage de la crémaillère et un élément de confinement des entraîneurs.

Les dessins ci-joints sont donnés à titre d'exemples indicatifs et non limitatifs. Ils représentent différents modes de réalisation préférés selon l'invention, mais également un mode de réalisation de l'état de la technique. Ils permettront de comprendre aisément l'invention.

La figure 1 représente une vue de dessus d'une crémaillère avec en position sous-jacente une roue dentée. La crémaillère et la roue constituent l'état de la technique. La crémaillère est représentée en trait plein dans sa position normale d'utilisation et en trait pointillé dans ces deux positions extrêmes d'utilisation avec désalignement.

La figure 2 représente une vue de côté de l'ensemble crémaillère-roue représenté à la figure 1.

La figure 3 représente une vue en perspective de l'ensemble crémaillère-roue représenté aux figures 1 et 2.

La figure 4 représente un détail de la figure 3.

La figure 5 représente une vue de dessus d'une crémaillère avec en position sous-jacente une roue dentée. La crémaillère et la roue constituent un mode de réalisation de l'invention. La crémaillère est représentée en trait plein dans sa position normale d'utilisation et en trait pointillé dans ces deux positions extrêmes d'utilisation avec désalignement.

La figure 6 représente une vue de côté de l'ensemble crémaillère-roue représenté à la figure 5.

La figure 7 représente une vue en perspective de l'ensemble crémaillère-roue représenté aux figures 5 et 6.

La figure 8 représente un détail de la figure 7.

La figure 9 représente une installation équipée du dispositif d'ouverture de la présente invention.

La figure 10 représente un détail de la figure 9.

La figure 11 représente une vue en perspective et éclatée des différents constituants de la présente invention avec un détail au niveau des entraîneurs de la roue.

La figure 12 représente une vue, identique à la figure 11, lorsque tous les constituants sont montés et coopèrent.

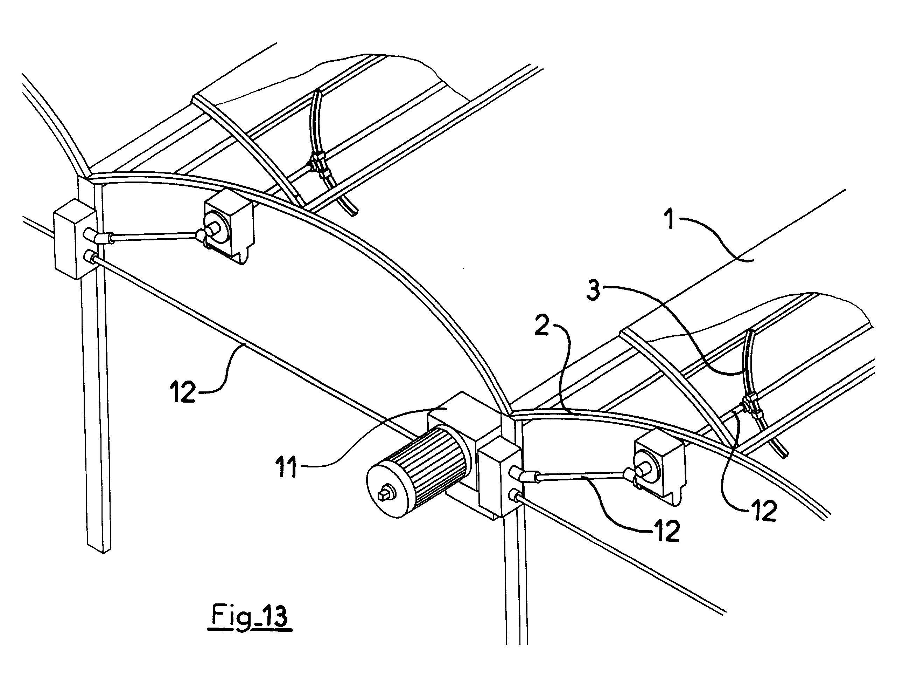

Enfin, la figure 13 représente une autre installation équipée du dispositif d'ouverture de la présente invention.

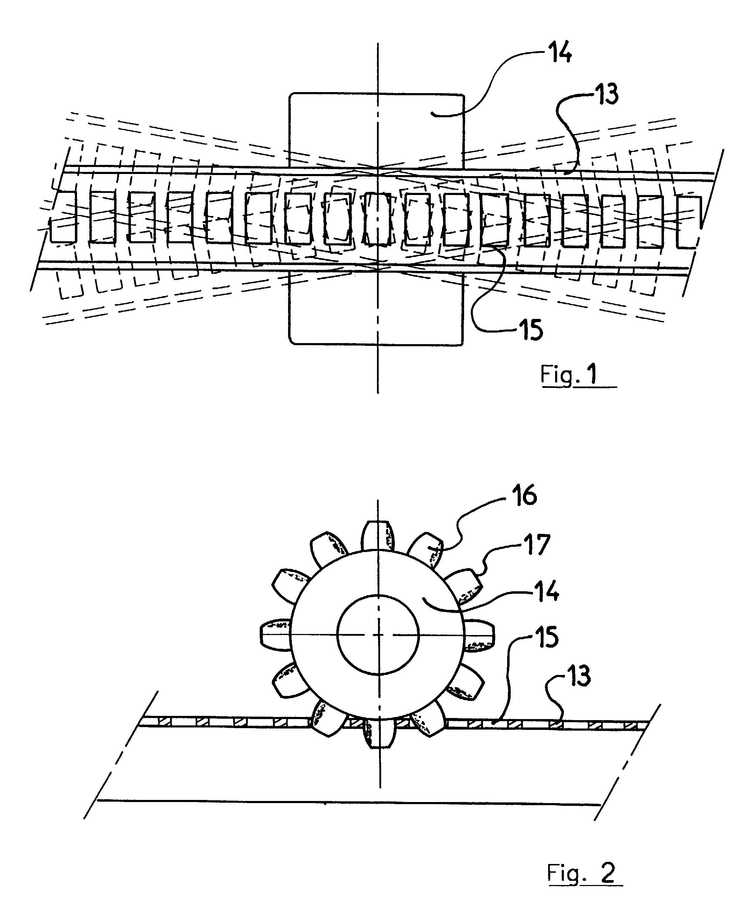

Les figures 1 à 4 représentent un mode actuel de réalisation.

Sur ces figures, la crémaillère 13 est engrenée par une roue dentée et motrice 14. Les trous ou alésages 15 de la crémaillère 13 ont une forme rectangulaire. De la même façon, les entraîneurs ou tétons 16 de la roue dentée motrice 14 sont de section transversale rectangulaire.

Lorsque la crémaillère 13 subit un désalignement, comme cela est représenté en lignes pointillées sur la figure 1, les bords des trous 15 de la crémaillère 13 vont rentrer en contact avec les entraîneurs 16 de la roue 14.

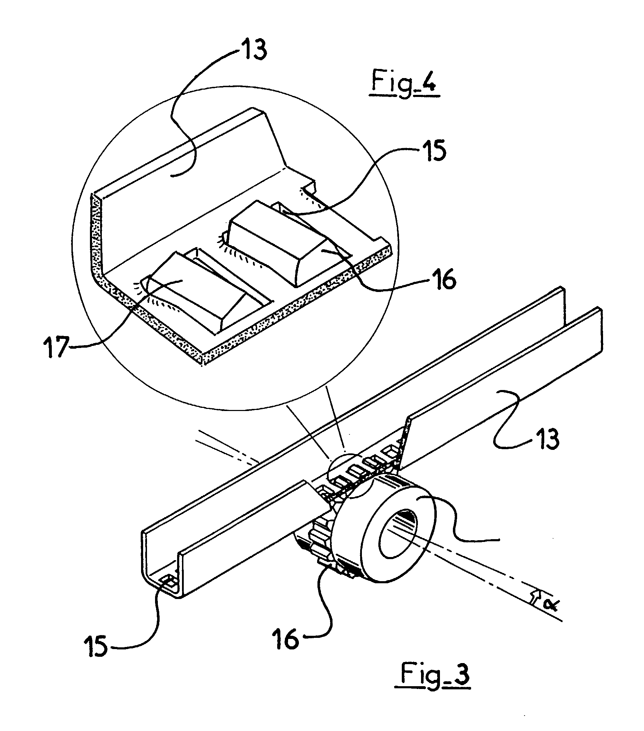

C'est ce qui est bien représenté à la figure 4, qui est une vue en détail de la figure 3, dans laquelle la crémaillère 13 subit un désalignement a d'une valeur comprise entre 5 et 20°.

On remarque que, lors du désalignement *α,* les entraîneurs viennent endommager les trous 15. Il peut y avoir une déformation mais également un retrait de matière, ce qui est préjudiciable pour la fiabilité de l'ensemble.

On remarque qu'en vue en coupe longitudinale les entraîneurs 16 ont une forme sensiblement trapézoïdale avec une petite base en position distale 17 qui est plate. Eventuellement, les deux côtés latéraux, c'est-à-dire entre la petite et la grande base, peuvent être légèrement arrondis ou bombés.

Quoi qu'il en soit, lors d'un désalignement *α,* il y aura détérioration, soit de la crémaillère, comme c'est le cas sur la figure 4, soit des entraîneurs 16.

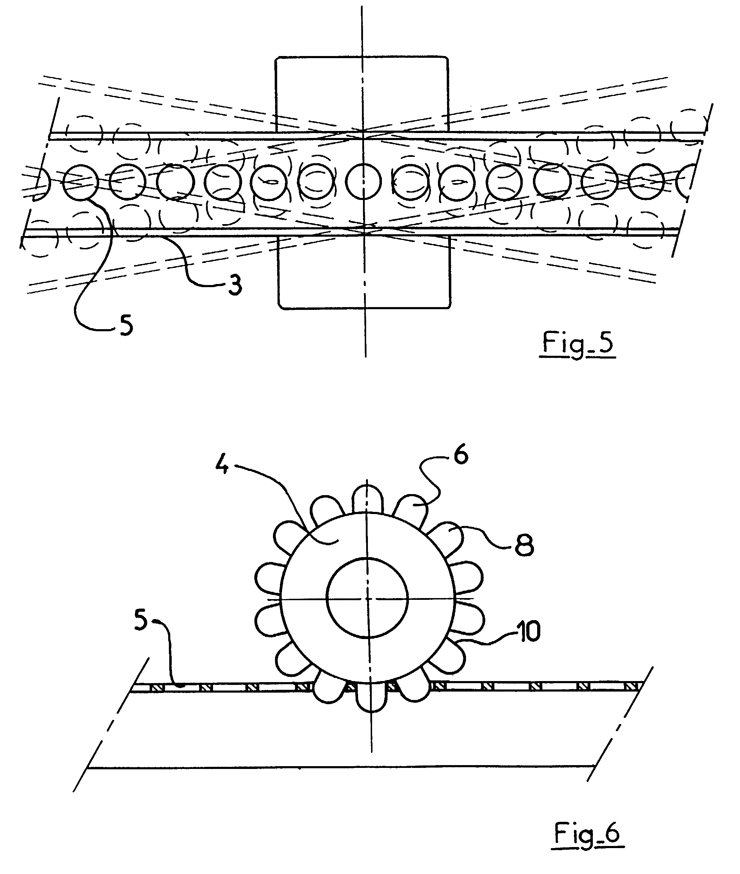

Comme cela est représenté aux figures 5 et suivantes, le mode de réalisation de la présente invention diffère de l'état de la technique par le fait que les trous ou alésages 5 de la crémaillère 3 ont une forme ronde ou circulaire. De plus, les entraîneurs 6 ou 7 de la roue 4 sont également en coupe transversale ronde ou circulaire. Les corps 10 des entraîneurs peuvent être consitués de cylindre droit comme c'est le cas sur les figures, ou de cylindre arrondi.

Il y a deux modes de réalisation différents représentés sur les figures.

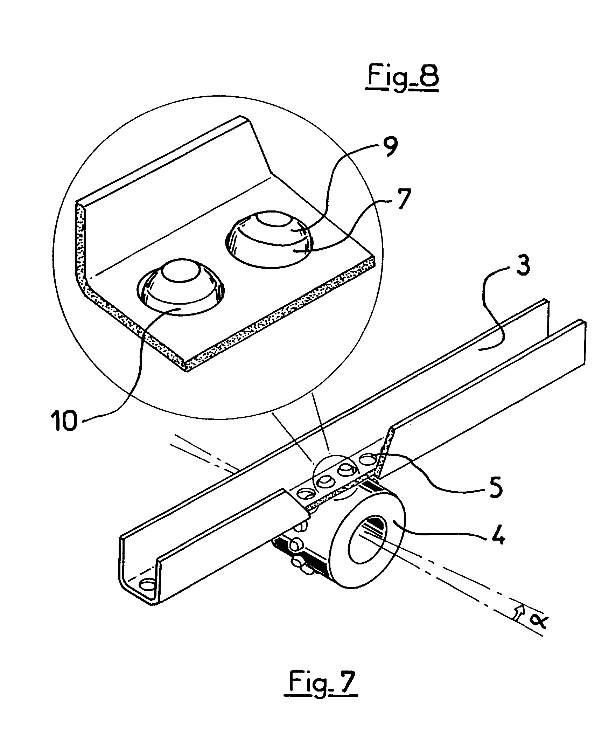

Ainsi aux figures 5 et 6, l'extrémité distale 8 des entraîneurs 6 est de forme arrondie, alors qu'aux figures 7, 8, 10 et 11, l'extrémité distale 9 des entraîneurs 7 est de forme tronconique avec, au sommet, une base plate.

Quel que soit le mode de réalisation des entraîneurs 6 ou 7, la section transversale de celle-ci est ronde ou circulaire.

On remarque qu'il est possible, également d'avoir un désalignement comme cela est représenté à la figure 5 mais également à la figure 7, le désalignement étant d'une valeur α identique ou supérieure à celui représenté à la figure 3.

Dans ce cas, il n'y aura aucune déformation au niveau des entraîneurs 6 ou 7 puisque les formes arrondies de chaque entraîneur 6 ou 7 font office de pivot pour la crémaillère 3 qui est désalignée. C'est ce qui est bien visible à la figure 5 où l' entraîneur 6 située dans le trou 5, en partie centrale du dessin, c'est-à-dire à l'aplomb de l'axe de rotation de la roue 4, ne subit aucune déformation que ce soit au niveau de la roue 4 où de la crémaillère 3.

Les deux entraîneurs adjacents 6 ou 7 à cet entraîneur 6 ou 7 en place au niveau du trou 5 ne déforment pas non plus la crémaillère 3 du fait que leur extrémité distale arrondie ou tronconique, ce qui facilite le guidage de la crémaillère 3.

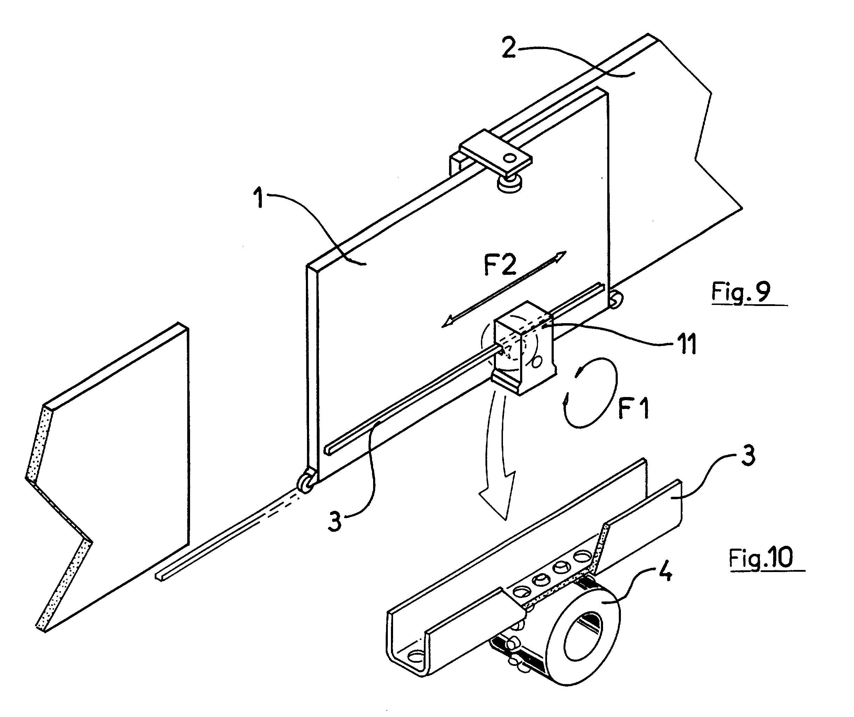

Sur la figure 9, un mode de réalisation et d'implantation du dispositif selon l'invention est représenté.

Ainsi, lorsque la roue dentée et motrice 4 est amenée en rotation selon F1, un châssis mobile 1, ici constitué par un portail 1, va être déplacé en translation selon F2 par rapport à un bâti fixe 2.

Bien entendu, la motorisation de la roue dentée 4 s'effectue par l'intermédiaire d'un moteur, non représenté sur les figures, mais dont est représenté le carter 11 qui contient, à la fois le moteur et la roue dentée 4.

Sur la figure 13, un autre mode de réalisation et d'implantation de la présente invention est représenté. Dans ce cas, il s'agit d'une application aux serres de grandes tailles.

Le carter moteur 11 va permettre la mobilité de plusieurs crémaillères 3 par l'intermédiaire d'arbres de transmission 12.

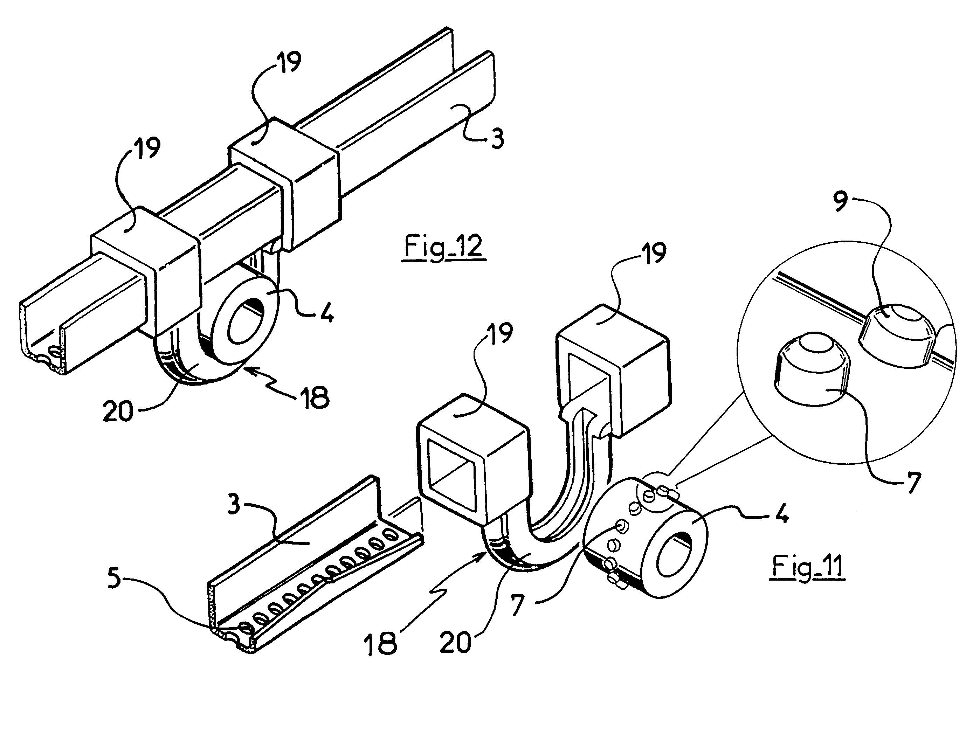

Selon les figures 11 et 12, un mode particulièrement intéressant de réalisation est représenté. Dans celui-ci, on améliore encore le guidage de la crémaillère 3 en associant à l'ensemble crémaillère 3 - roue dentée 4, un carter 18 de ladite roue 4.

En fait, ce carter 18 est constitué de deux passants 19 du carter 18 qui permettent le guidage de la crémaillère 3. C'est ce qui est bien représenté à la figure 12.

Les deux passants 19 sont reliés l'un à l'autre par un élément de confinement 20 dans lequel les entraîneurs 6 ou 7 sont confinées, lorsqu'elles n'engrènent pas les trous 5 de la crémaillère 3. Il y a donc également un guidage à ce niveau.

### REFERENCES

- 1.: Châssis mobile
- 2.: Bâti fixe
- 3.: Crémaillère
- 4.: Roue dentée et motrice ou entraîneur
- 5.: Trous ronds ou empreintes circulaires de la crémaillère 3
- 6.: Entraîneurs ou tétons de la roue 4
- 7.: Entraîneurs ou tétons de la roue 4
- 8.: Extrémité distale arrondie des entraîneurs 6
- 9.: Extrémité distale tronconique des entraîneurs 7
- 10.: Corps de l'entraîneur
- 11.: Carter moteur
- 12.: Arbre de transmission
- 13.: Crémaillère
- 14.: Roue dentée et motrice
- 15.: Trous de la crémaillère 13
- 16.: Entraîneurs de la roue 14
- 17.: Extrémité distale des entraîneurs 16
- 18.: Carter de la roue 14
- 19.: Passants du carter 18 pour le guidage de la crémaillère 3
- 20.: Elément de confinement des entraîneurs 7
- α.: Débattement angulaire ou désalignement de la crémaillère 3 ou 13 par rapport à la roue 4 ou 14 fixe.
- F1.: Mouvement de rotation de la roue 4
- F2.: Mouvement de translation de la crémaillère 3

## Revendications

1. Dispositif d'ouverture d'un châssis mobile (1) par rapport à un bâti fixe (2), qui est constitué d'au moins une crémaillère (3) et d'au moins une roue dentée et motrice (4), la crémaillère (3) comporte une succession d'alésages ronds (5), la roue (4) comporte des entraîneurs (6 ou 7) de section transversale ronde, chaque entraîneur (6 ou 7) pouvant engrener chaque alésage (5)caractérisé par le fait
que le diamètre de chaque alésage (5) est supérieur au diamètre de chaque entraîneur (6 ou 7) et
que le rapport entre le diamètre de chaque alésage (5) sur le diamètre de chaque entraîneur (6 ou 7) est compris entre 1,1 et 1,3.

2. Dispositif, selon la revendication 1, caractérisé par le fait,
que la pente du cylindre arrondi de l'extrémité distale (9) de chaque entraîneur (7) est comprise entre 40 et 50° par rapport à l'axe longitudinal de l'entraîneur (7).

3. Dispositif, selon l'une quelconque des revendications 1 ou 2, caractérisé par le fait
qu'entre l'extrémité distale et l'extrémité proximale, qui sert d'interface entre l'entraîneur et le reste de la roue, le corps (10) dudit entraîneur (6 ou 7) est constitué par un cylindre droit.

4. Dispositif, selon la revendication 1, caractérisé par le fait
que les entraineurs (6 ou 7) qui ne coopèrent pas avec la crémaillère (3) sont confinés dans un carter (18) et
que le carter (18) comporte au moins un passant (19) pour le guidage de la crémaillère et un élément de confinement (20) des entraîneurs (6 ou 7).

5. Dispositif selon la revendication 4, caractérisé par le fait
que les deux passants (19) sont reliés l'un à l'autre par un élément de confinement (20) dans lequel les entraîneurs (6 ou 7) sont confinées, lorsqu'elles n'engrènent pas les trous (5) de la crémaillère (3) ; il y a donc également un guidage à ce niveau.

6. Dispositif selon la revendication 4, caractérisé par le fait
que dans le cas d'une application aux serres de grandes tailles, le carter moteur (11) permet la mobilité de plusieurs crémaillères (3) par l'intermédiaire d'arbres de transmission (12).
